# EUROPEAN PATENT SPECIFICATION

(11) **EP 3 395 881 B1**
(45) Date of publication and mention of the grant of the patent: **10.04.2024**
(21) Application number: 17167715.6
(22) Date of filing: 24.04.2017
(51) Int. Cl.: C08L 23/08, C08F 2/00

(54) **HALOGEN- AND PHOSPHORUS-FREE FLAME-RETARDANT RESIN COMPOSITION, AND ELECTRIC WIRE AND CABLE USING THE SAME**
HALOGEN- UND PHOSPHORFREIE FLAMMHEMMENDE HARZZUSAMMENSETZUNG UND ELEKTRODRAHT UND -KABEL MIT VERWENDUNG DAMIT
COMPOSITION DE RÉSINE IGNIFUGE EXEMPTE DE PHOSPHORE ET D'HALOGÈNE ET FIL ET CÂBLE ÉLECTRIQUE L'UTILISANT

(43) Date of publication of application: 31.10.2018
(73) Proprietor: Proterial, Ltd., Tokyo 135-0061 (JP)
(72) Inventor: NAKAHASHI, Masanobu, Tokyo 108-8224 (JP); KAJIYAMA, Motoharu, Tokyo 108-8224 (JP); KIKUCHI, Ryutaro, Tokyo 108-8224 (JP)
(74) Representative: Betten & Resch

(56) References cited:
- EP-A1- 3 139 389
- CN-B- 103 881 242
- US-A1- 2013 240 239
- "Carbon Black Yearbook 2012", CARBON BLACK YEARBOOK 2012, no. 62, 24 August 2012 (2012-08-24),
- Cancarb: "THERMAX * ULTRA PURE MEDIUM THERMAL CARBON BLACK D5453", 60) 1702 Brier Park Crescent N.W. Medicine Hat, Alberta T1C 1T9 Canada Telephone 1.403.527.1121 Fax, 1 January 2020 (2020-01-01), pages 1-403, XP055719204, Retrieved from the Internet: URL:https://cancarb.com/wp-content/uploads /2020/05/Cancarb-Thermax-ultra-pure-specif ication-sheets.pdf [retrieved on 2020-07-30]
- Asahi: "Asahi carbon black (for rubber) physical chemistry properties of main products | Products | Products and Technology | ASAHI CARBON CO., LTD.", , 27 September 2019 (2019-09-27), XP055719205, Retrieved from the Internet: URL:https://www.asahicarbon.co.jp/global_s ite/product/technology/cb_physics.html [retrieved on 2020-07-30]
- Tokai Carbon: "SEAST - Tokai Carbon", , 12 May 2020 (2020-05-12), XP055719208, Retrieved from the Internet: URL:https://www.tokaicarbon.co.jp/products /carbon_b/pdf/SEAST.pdf [retrieved on 2020-07-30]
- Michael E Spahr ET AL: "Carbon Black as a Polymer Filler", , 23 April 2016 (2016-04-23), XP055719240, DOI: 10.1007/978-3-642-37179-0_36-2 Retrieved from the Internet: URL:https://link.springer.com/content/pdf/ 10.1007/978-3-642-37179-0_36-2.pdf [retrieved on 2020-07-30]
- BULGIN ET AL: "Reinforcement of rubbers and plastics by particulate fillers", COMPOSITES, IPC BUSINESS PRESS LTD. HAYWARDS HEATH, GB, vol. 2, no. 3, 1 September 1971 (1971-09-01), pages 165-169, XP024044298, ISSN: 0010-4361, DOI: 10.1016/0010-4361(71)90954-2 [retrieved on 1971-09-01]

## Description

### BACKGROUND OF THE INVENTION

### 1. FIELD OF THE INVENTION

The invention relates to a halogen- and phosphorus-free flame-retardant resin composition, and an electric wire and a cable using the resin composition.

### 2. DESCRIPTION OF THE RELATED ART

In recent years, halogen-free flame-retardant wires and cables, which are formed without using polyvinyl chloride or halogen-based flame retardants and have little environmental impact, have spread rapidly as so-called eco-friendly wires/cables.

For conventional halogen-free flame-retardant wires and cables, a resin composition containing a polyolefin mixed with a halogen-free flame-retardant such as magnesium hydroxide is generally used to form insulations of the wire sheaths of the cable formed (see, e.g., JP-A-H10-287777).

### SUMMARY OF THE INVENTION

If a halogen-free flame retardant such as magnesium hydroxide is used for providing a high flame retardancy which is enough to pass a vertical tray flame test and to meet the international flame retardant standards (e.g., EN, DIN, BS), it is necessary to add a large amount of the halogen-free flame retardant. This may cause a problem of a decrease in characteristics such as mechanical strength, flexibility, heat resistance and white discoloration resistance. Development of halogen-free flame-retardant resin compositions which can solve the problem is desired particularly to obtain wires and cables suitable for rolling stocks.

On the other hand, the amount of halogen-free flame retardant to be used can be reduced by adding a flame-retardant aid such as red phosphorus. However, there are concerns that flame-retardant aids such as red phosphorus produce toxic phosphine when burnt or cause contamination of groundwater source by phosphoric acid which is produced when discarded. Therefore, in recent years, there is a tendency to avoid use of red phosphorus, etc., and there is a demand for development of halogen- and phosphorus-free flame-retardant wires and cables excellent in flame retardancy.

It is an object of the invention to provide a halogen- and phosphorus-free flame-retardant resin composition that has high flame retardancy enough to meet the international flame retardant standards (any one or more of EN, DIN and BS standards), is excellent in mechanical strength, flexibility, heat resistance and white discoloration resistance, and is suitable for use in rolling stocks, as well as an electric wire and a cable using the halogen- and phosphorus-free flame-retardant resin composition.

According to embodiments of the invention, a halogen- and phosphorus-free flame-retardant resin composition, an electric wire and a cable defined by [1] to [6] below are provided.
[1] A halogen- and phosphorus-free flame-retardant resin composition, comprising:
   a copolymer (A) of ethylene and α-olefin having **3** to **12** carbon atoms;
   an ethylene-vinyl acetate copolymer (B); and
   a maleic acid-modified ethylene copolymer (C) containing an ethylene and an α-olefin having **3** to **12** carbon atoms as copolymer components,
   wherein a content of the copolymer (A) in the resin component is **20** to **80** mass%,
   wherein a content of the maleic acid-modified ethylene copolymer (C) in the resin component is **5** to **30** mass%, and
   wherein the halogen- and phosphorus-free flame-retardant resin composition further comprises, relative to **100** parts by mass of the resin component, **100** to **250** parts by mass of fatty acid-treated magnesium hydroxide, **1** to **15** parts by mass of silicone rubber, and **2** to **20** parts by mass of carbon black with a surface area of **11** to **99** m²/g.
[2] The halogen- and phosphorus-free flame-retardant resin composition according to [1], wherein the copolymer (A) is obtained by polymerization using a metallocene catalyst.
[3] The halogen- and phosphorus-free flame-retardant resin composition according to [1] or [2], wherein a content of the ethylene-vinyl acetate copolymer (B) in the resin component is **15** to **75** mass%.
[4] An electric wire, comprising an insulation layer comprising a halogen- and phosphorus-free flame-retardant resin composition comprising a copolymer (A) of ethylene and α-olefin having **3** to **12** carbon atoms, an ethylene-vinyl acetate copolymer (B), and a maleic acid-modified ethylene copolymer (C) containing an ethylene and an α-olefin having **3** to **12** carbon atoms as copolymer components,
   wherein a content of the copolymer (A) in the resin component is **20** to **80** mass%,
   wherein a content of the maleic acid-modified ethylene copolymer (C) in the resin component is **5** to **30** mass%, and
   wherein the halogen- and phosphorus-free flame-retardant resin composition further comprises, relative to **100** parts by mass of the resin component, **100** to **250** parts by mass of fatty acid-treated magnesium hydroxide, **1** to **15** parts by mass of silicone rubber, and **2** to **20** parts by mass of carbon black with a surface area of **11** to **99** m²/g.
[5] A cable, comprising a sheath comprising a halogen- and phosphorus-free flame-retardant resin composition comprising a resin component that comprises a copolymer (A) of ethylene and α-olefin having **3** to **12** carbon atoms, an ethylene-vinyl acetate copolymer (B), and a maleic acid-modified ethylene copolymer (C) containing an ethylene and an α-olefin having **3** to **12** carbon atoms as copolymer components,
   wherein a content of the copolymer (A) in the resin component is **20** to **80** mass%,
   wherein a content of the maleic acid-modified ethylene copolymer (C) in the resin component is **5** to **30** mass%, and
   wherein the halogen- and phosphorus-free flame-retardant resin composition further comprises, relative to **100** parts by mass of the resin component, **100** to **250** parts by mass of fatty acid-treated magnesium hydroxide, **1** to **15** parts by mass of silicone rubber, and **2** to **20** parts by mass of carbon black with a surface area of **11** to **99** m²/g.
[6] The cable according to [5], comprising the electric wire according to [4].

### Effects of the invention

According to an embodiment of the invention, a halogen- and phosphorus-free flame-retardant resin composition can be provided that has high flame retardancy enough to meet the international flame retardant standards (any one or more of EN, DIN and BS standards), is excellent in mechanical strength, flexibility, heat resistance and white discoloration resistance, and is suitable for use in rolling stocks, as well as an electric wire and a cable using the halogen- and phosphorus-free flame-retardant resin composition.

### BRIEF DESCRIPTION OF THE DRAWINGS

Next, the present invention will be explained in more detail in conjunction with appended drawings, wherein:
**FIG.1** is a schematic cross sectional view showing an example of an electric wire in an embodiment of the present embodiment; and
**FIG2** is a schematic cross sectional view showing an example of a cable in the embodiment of the invention.

### DETAILED DESCRIPTION OF THE PREFERRED EMBODIMENTS

### Halogen- and phosphorus-free flame-retardant resin composition

A halogen- and phosphorus-free flame-retardant resin composition in the embodiment of the invention contains a resin component which contains a copolymer (A) of ethylene and α-olefin having **3** to **12** carbon atoms, an ethylene-vinyl acetate copolymer (B), and a maleic acid-modified ethylene copolymer (C) containing an ethylene and an α-olefin having **3** to **12** carbon atoms as copolymer components, wherein a content of the copolymer (A) in the resin component is **20** to **80** mass%, a content of the maleic acid-modified ethylene copolymer (C) in the resin component is **5** to **30** mass%, and the halogen- and phosphorus-free flame-retardant resin composition also contains **100** to **250** parts by mass of fatty acid-treated magnesium hydroxide, **1** to **15** parts by mass of silicone rubber and **2** to **20** parts by mass of carbon black with a surface area of **11** to **99** m²/g with respect to **100** parts by mass of the resin component.

### Copolymer (A)

The resin component of the halogen- and phosphorus-free flame-retardant resin composition in the embodiment of the invention contains the copolymer (A) of ethylene and α-olefin having **3** to **12** carbon atoms.

As the copolymer (A), it is possible to use, e.g., ethylene-propylene copolymer, ethylene-butene copolymer, ethylene-hexene copolymer and ethylene-octene copolymer, etc. Examples of the preferable α-olefin having **3** to **12** carbon atoms include propylene, **1**-butene, **4**-methyl-**1**-pentene, **1**-hexene and **1**-octene, etc. Of those, **1**-butene and **1**-octene are more preferable.

The copolymer (A) is preferably obtained by polymerization of an ethylene with an α-olefin having **3** to **12** carbon atoms using a metallocene catalyst. In this case, a high-strength flexible copolymer with a narrow molecular weight distribution is obtained. The hardness of the copolymer (A) is preferably **60** to **95,** more preferably **65** to **90,** as measured by a general hardness tester.

The content of the copolymer (A) in the resin component is **20** to **80** mass%, preferably **30** to **70** mass%. This is because flexibility is low when less than **20** mass%, while mechanical strength (tensile strength) and flame retardancy are low when more than **80** mass%.

### Ethylene-vinyl acetate copolymer (B)

The resin component of the halogen- and phosphorus-free flame-retardant resin composition in the embodiment of the invention contains the ethylene-vinyl acetate copolymer (B).

The ethylene-vinyl acetate copolymer (B) contains vinyl acetate. Therefore, endothermic reaction is caused by deacetylation when the composition is burnt and thermally decomposed, and combustion is thereby suppressed.

The vinyl acetate content (VA content) in the ethylene-vinyl acetate copolymer (B) is preferably **20** to **50** mass%, more preferably **25** to **40** mass%.

The content of the ethylene-vinyl acetate copolymer (B) in the resin component is preferably **15** to **75** mass%. The lower limit of this range is more preferably **30** mass%, further preferably **35** mass%. Meanwhile, the upper limit of this range is more preferably **70** mass%, further preferably **65** mass%.

### Maleic acid-modified ethylene copolymer (C)

The resin component of the halogen- and phosphorus-free flame-retardant resin composition in the embodiment of the invention contains the maleic acid-modified ethylene copolymer (C) containing an ethylene and an α-olefin having **3** to **12** carbon atoms as copolymer components. To obtain the maleic acid-modified ethylene copolymer (C), a copolymer of ethylene and α-olefin having **3** to **12** carbon atoms is modified with a maleic anhydride. The amount modified with the maleic anhydride is not specifically limited.

Surfaces of the ethylene-vinyl acetate copolymer (B) and the fatty acid-treated magnesium hydroxide are adhered by the maleic acid-modified ethylene copolymer (C) which thereby improves mechanical strength (tensile strength) and heat resistance.

As the copolymer of ethylene and α-olefin having **3** to **12** carbon atoms, it is possible to use, e.g., ethylene-propylene copolymer, ethylene-butene copolymer, ethylene-hexene copolymer and ethylene-octene copolymer, etc. Examples of the α-olefin having **3** to **12** carbon atoms include propylene, **1**-butene, **4**-methyl-**1**-pentene, **1**-hexene and **1**-octene, etc. Of those, **1**-butene and **1**-octene are more preferable.

The copolymer is preferably obtained by polymerization of an ethylene with an α-olefin having **3** to **12** carbon atoms using a metallocene catalyst, in the same manner as the copolymer (A).

The content of the maleic acid-modified ethylene copolymer (C) (e.g., maleic acid-modified ethylene butene copolymer) in the resin component is **5** to **30** mass%, preferably **5** to **20** mass%. This is because when less than **5** mass%, adhesion between the ethylene-vinyl acetate copolymer (B) and the fatty acid-treated magnesium hydroxide is weak and sufficient heat resistance is not obtained. When more than **30** mass%, the adhesion between the ethylene-vinyl acetate copolymer (B) and the fatty acid-treated magnesium hydroxide is too strong and this causes a decrease in flexibility.

### Fatty acid-treated magnesium hydroxide

To improve flame retardancy, the halogen- and phosphorus-free flame-retardant resin composition in the embodiment of the invention contains **100** to **250** parts by mass, preferably **130** to **200** parts by mass, of the fatty acid-treated magnesium hydroxide with respect to **100** parts by mass of the resin component. This is because flame retardancy is not sufficient when less than **100** parts by mass, while mechanical strength decreases and also flexibility is low when more than **250** parts by mass.

### Silicone rubber and carbon black

To improve white discoloration resistance, the halogen- and phosphorus-free flame-retardant resin composition in the embodiment of the invention contains a silicone rubber and carbon black with a surface area of **11** to **99** m²/g.

Electric wires covered with a resin composition containing a large amount of fatty acid-treated magnesium hydroxide are likely to turn white when the surface is rubbed. The reason for this is considered that when the surface is rubbed, diffuse reflection is likely to occur due to minute voids formed between the resin and the magnesium hydroxide and makes look white.

When using, e.g., a silane-treated magnesium hydroxide to prevent such voids, adhesion of the resin to the magnesium hydroxide is better and white discoloration is thus reduced to some extent, but flexibility decreases significantly.

When using carbon black having an intense color and a large surface area to prevent diffuse reflection, white discoloration is reduced to some extent but it is not enough.

Silicone rubber, which is effective to reduce a frictional force, allows the surface of wires to slip easily when rubbed and minute voids are thus less likely to be formed between the resin and the magnesium hydroxide. However, it is still not enough.

Good white discoloration resistance is achieved only by combining the effect of the carbon black with the effect of the silicone rubber. This is a new and novel finding.

The halogen- and phosphorus-free flame-retardant resin composition in the embodiment of the invention contains **1** to **15** parts by mass, preferably **2** to **12** parts by mass, of silicone rubber with respect to **100** parts by mass of the resin component. This is because white discoloration resistance is not sufficient when less than **1** part by mass, while slippage occurs in an extruder and causes a difficulty in molding when more than **15** parts by mass.

The silicone rubber may be formed of general materials such as dimethylsiloxane, methyl vinyl siloxane and methyl phenyl polysiloxane, etc., and the material is not specifically limited. These materials may be used alone or in combination of two or more.

The halogen- and phosphorus-free flame-retardant resin composition in the embodiment of the invention also contains **2** to 20 parts by mass, preferably **3** to **15** parts by mass, of carbon black with a surface area of **11** to **99** m²/g with respect to **100** parts by mass of the resin component. This is because white discoloration resistance is not sufficient when less than **2** parts by mass, while flexibility decreases when more than **20** parts by mass.

The carbon black used here has a surface area of **11** to **99** m²/g. This is because white discoloration resistance is not sufficient when the surface area is less than **11** m²/g, while flexibility decreases when the surface area is more than **99** m²/g. Carbon blacks with a surface area in such a range may be used alone or in combination of two or more.

### Other components

In the embodiment of the invention, it is possible to add various additives such as other polymers, inorganic fillers, stabilizers, antioxidants, plasticizers, lubricants, colorants, ultraviolet absorbers, light stabilizers, cross-linking agents and crosslinking aids, in addition to the above-listed components.

The halogen- and phosphorus-free flame-retardant resin composition in the embodiment of the invention is preferably cross-linked after being molded into an insulation of wire or a sheath of cable. The cross-linking method can be a well-known conventional method and is not specifically limited. Chemical crosslinking (organic peroxide cross-linking), radiation crosslinking or silane crosslinking, etc., can be used.

### Electric wire

An electric wire in the embodiment of the invention is provided with a conductor and an insulation layer formed of the halogen- and phosphorus-free flame-retardant resin composition in the embodiment of the invention.

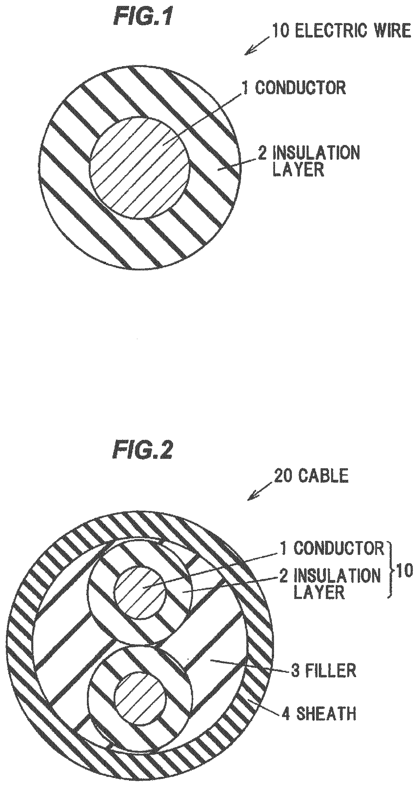

**FIG.1** is a schematic cross sectional view showing an example of an electric wire in the embodiment of the embodiment. As shown in **FIG.1****,** an electric wire **10** in the present embodiment is provided with a conductor **1** and an insulation layer **2** covering the conductor **1.** The conductor **1** to be covered can be a conductor having an outer diameter of, e.g., about **0.15** to **7** mm. A conductor formed by twisting tin-plated soft copper wires, etc., can be suitably used, but it is not limited thereto. The number of the conductors **1** is not limited to one as shown in **FIG.1****,** and plural conductors **1** may be provided.

The insulation layer **2** is formed of the halogen- and phosphorus-free flame-retardant resin composition in the embodiment of the invention. The halogen- and phosphorus-free flame-retardant resin composition is applied as an insulation layer by molding, e.g., extrusion coating, and is then cross-linked by electron beam irradiation, etc., and the halogen- and phosphorus-free flame-retardant electric wire **10** is thereby obtained. For the extrusion coating, for example, the halogen- and phosphorus-free flame-retardant resin composition before cross-linkage is kneaded by a roll, a Banbury mixer or an extruder and the obtained pelletized compound is extruded to cover a conductor using a well-known wire extruder equipped with a cross head die.

In the present embodiment, the insulation layer is configured as a single layer as shown in **FIG.1** but may have a multilayer structure. A separator or a braid, etc., may be further provided, if required.

### Cable

The cable in the embodiment of the invention is characterized in that the halogen- and phosphorus-free flame-retardant resin composition in the embodiment of the invention is used as a covering material (sheath, or sheath and insulation layer).

**FIG.2** is a schematic cross sectional view showing an example of a cable in the embodiment of the invention. As shown in **FIG.2****,** a cable **20** in the present embodiment is provided with a two-core twisted wire formed by twisting, together with a filler 3 such as paper, two electric wires **10** each formed by covering the conductor **1** with the insulation layer **2,** and a sheath **4** formed therearound by extrusion coating. One wire (single-core) or a multi-core twisted wire other than two-core may be used instead of the two-core twisted wire. The sheath **4** may be extruded on a binding tape which is applied around the two-core twisted wire.

The sheath **4** is formed of the halogen- and phosphorus-free flame-retardant resin composition in the embodiment of the invention. The insulation layer **2** here is not limited to the insulation formed of the halogen- and phosphorus-free flame-retardant resin composition in the embodiment, and may be formed of another insulation resin composition (preferably, halogen- and phosphorus-free flame-retardant). The halogen- and phosphorus-free flame-retardant resin composition is applied as an insulation layer or a sheath layer by molding, e.g., extrusion coating, and is then cross-linked by electron beam irradiation, etc., and the halogen- and phosphorus-free flame-retardant cable **20** is thereby obtained.

In the present embodiment, the sheath is configured as a single layer as shown in **FIG2** but may have a multilayer structure. A separator or a braid, etc., may be further provided, if required.

### Examples

The invention will be described in more detail below based on Examples and Comparative Examples. However, the invention is not limited thereto.

The electric wires **10** having the structure shown in **FIG.1** were made by the following method and were evaluated.

### (1) Making of halogen- and phosphorus-free flame-retardant resin composition

Materials mixed in the proportions shown in Tables **1** and **2** were kneaded and pelletized by an open roll mill heated to **100**°C, thereby obtaining resin compositions in Examples and Comparative Examples. The materials used are shown in Table 3.

### (2) Manufacturing of the electric wire

Using a **40**-mm extruder (L/D=**22**) maintained at **100**°C, each of the resin compositions obtained in the above process (**1**) was applied to a tin-plated copper twisted conductor having a diameter **of 2.3** mm at an extrusion rate of **40** m/min so as to have a thickness of **1.1** mm. Then, cross-linking was performed using steam of **13** kg/cm² for **3** minutes, thereby obtaining each electric wire.

### (3) Evaluation

Using the electric wires manufactured as described above, mechanical strength (tensile strength, elongation), flexibility (modulus at **100**%), heat resistance (tensile strength retention, elongation retention), flame retardancy (VTFT) and white discoloration resistance were evaluated as follows. Tables **1** and **2** show the evaluation results.

### Mechanical strength

The conductors were pulled out of the manufactured electric wires and tubular samples were obtained. Then, tensile strength and tensile elongation of each sample were measured by conducting a tensile test in accordance with JIS C**3005**. The target values were not less than **7** MPa for tensile strength and not less than **350**% for elongation. The samples achieved the target value or more were regarded as Pass and those below the target value were regarded as Fail.

### Flexibility

Modulus at **100**% was measured in the same tensile test. The target value for the modulus at **100**% was not more than **5** MPa. The samples achieved the target value or below were regarded as Pass and those more than the target value were regarded as Fail.

### Heat resistance

Each sample after the measurement of mechanical strength was placed and left in a heat aging tester at **150**°C for **96** hours and was then taken out. Mechanical strength (tensile strength and elongation) of the samples was measured by conducting the above-mentioned tensile test again and the obtained value was compared to the initial value (the value before the heat aging test). In detail, tensile strength retention (%)=(tensile strength after heat aging test/ tensile strength before heat aging test)x100 and elongation retention (%)=(elongation after heat aging test/ elongation before heat aging test)**x100** were calculated. The target values were not less than **80**% for both tensile strength retention and elongation retention. The samples achieved the target value or more were regarded as Pass and those below the target value were regarded as Fail.

### Flame retardancy

For flame retardancy, a vertical tray flame test (VTFT) was conducted by the test method in accordance with BS **6853** standard and BS EN **60332** part **3-21.** Seven **3.5**-meter electric wires were bundled into one, and eleven bundles were vertically arranged at equal intervals and were burnt for **20** minutes. Based on high flame retardancy enough to meet the international flame retardant standards (any one or more of EN, DIN and BS standards), a char length of not more than **2.5** m from the lower end after self-extinction was set as the target. The samples achieved the target value or less were regarded as Pass (○) and those more than the target value were regarded as Fail (×).

### White discoloration resistance

For white discoloration resistance, a ϕ**2** mm stainless steel bar was placed on and rubbed against each electric wire by moving back and forth **10** times with a load of **100**g, and white discoloration was visually evaluated. The samples without white discoloration were regarded as Pass (○) and the samples turned white were regarded as Fail (×).

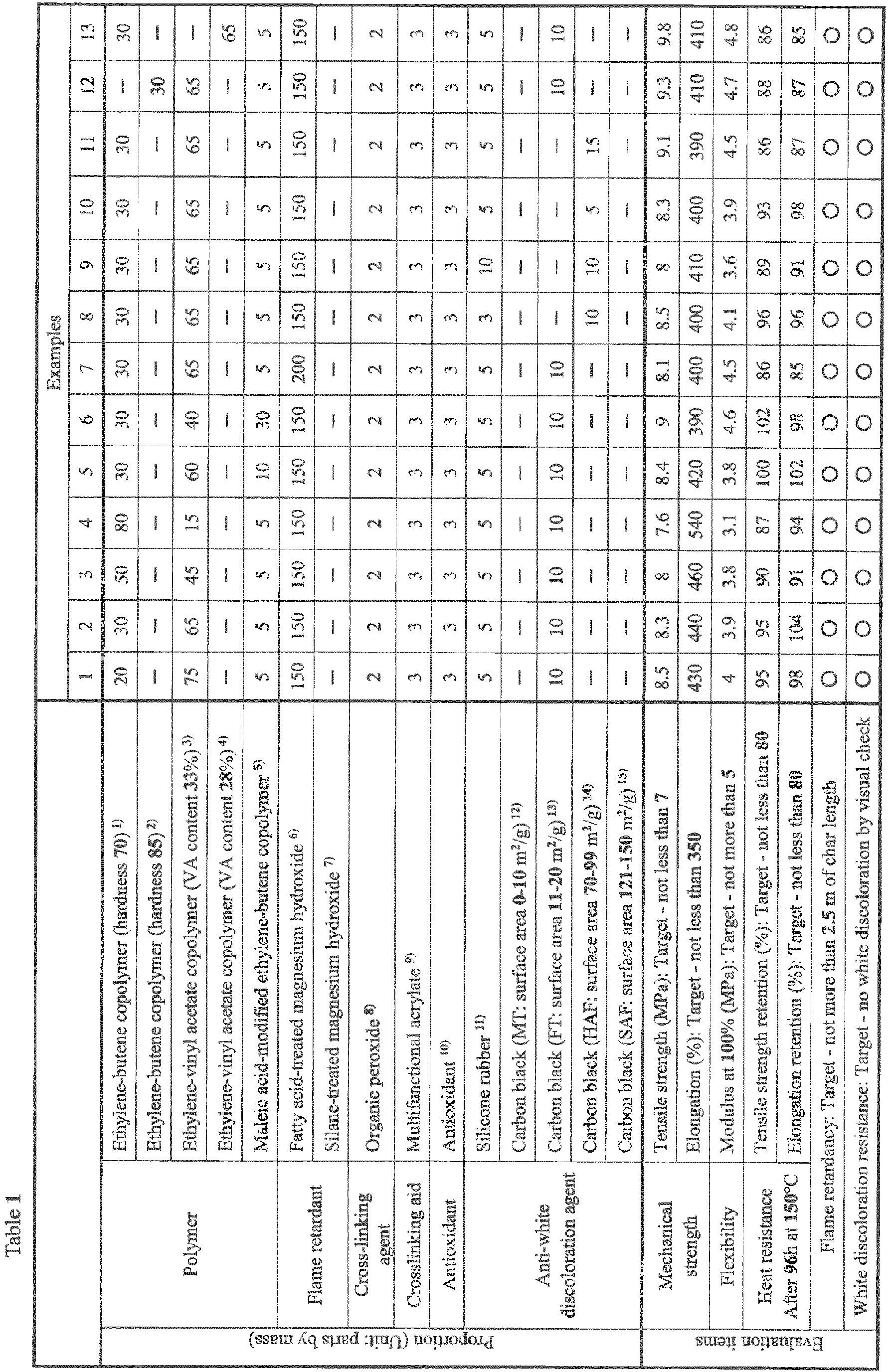

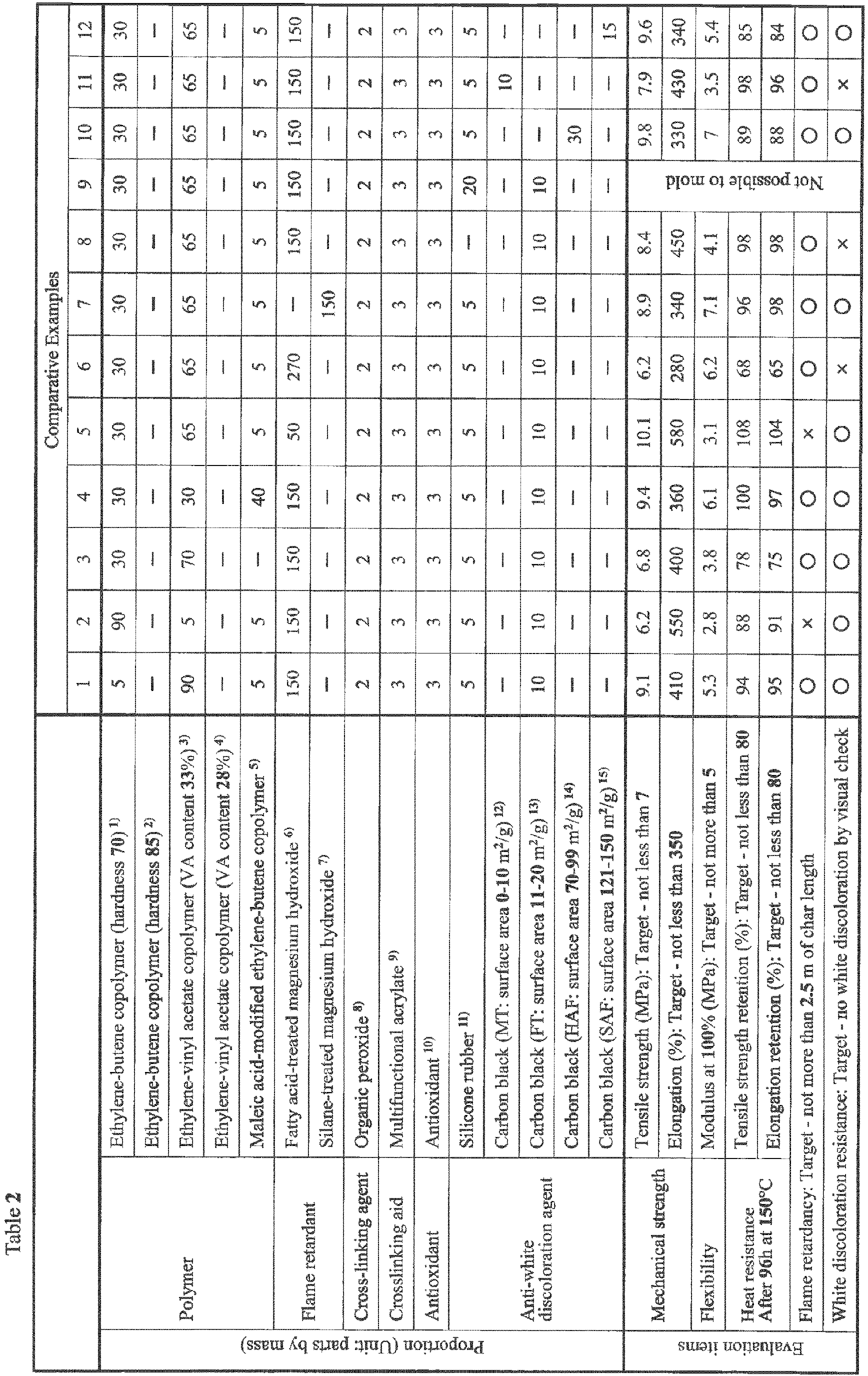

**Table 3: Material used**

| | | |
|---|---|---|
| 1) | Ethylene-butene copolymer (hardness 70) | Trade name: TAFMER DF740, manufactured by Mitsui Chamicals |
| 2) | Ethylene-butene copolymer (hardness 85) | Trade name: TAFMER DF840, manufactured by Mitsui Chemicals |
| 3) | Ethylene-vinyl acetate copolymer (VA content 33%) | Trade name: Eva Flex EV170, manufactured by Du Pont-Mitsui Polychemicals |
| 4) | Ethylene-vinyl acetate copolymer (VA content 28%) | Trade name: Eva Flex EV260, manufactured by Du Pont-Mitsui Polychemicals |
| 5) | Maleic acid-modified ethylene-butene copolymer | Trade name: TAFMER MH7020, manufactured by Mitsui Chemicals |
| 6) | Fatty acid-treated magnesium hydroxid | Trade name: Kisuma 5A, manufactured by Kyowa Chemical Industry |
| 7) | Silane-treated magnesium hydroxid | Trade name: Magseeds S4, manufactured by Konoshima Chemical |
| 8) | Organic peroxid | Trade name: Perbutyl P, manufactured by NOF Corporation |
| 9) | Multifunctional acrylate | Trade name: A-TMPT, manufactured by Shin-Nakamura Chemical |
| 10) | Antioxidant | Trade name: Nocrac 224, manufactured by Ouchi Shinko Chemical Industrial |
| 11) | Silicone rubber | Trade name: KE561-U(A), manufactured by Shin-Etsu Chemical |
| 12) | Carbon black (MT: surface area 0-10 m²/g) | Trade name: Thermax N990, manufactured by Cancarb |
| 13) | Carbon black (FT: surface area 11-20 m²/g) | Trade name: Asahi Thermal, manufactured by Asahi Carbon |
| 14) | Carbon balck (HAF: surface area 70-99 m²/g) | Trade name: Asahi #70G, manufactured by Asahi Carbon |
| 15) | Carbon black (SAF: surface area 121-150 m²/g) | Trade name: SEAST 9, manufactured by Tokai Carbon |

| | | |
|---|---|---|
| ***1)** and **2)** are obtained by polymerization using a metallocene catalyst. Ethylene-butene copolymer contained in **5)** is obtained by polymerization using a metallocene catalyst. | | |

In Examples **1** to **13,** all of mechanical strength, flexibility, heat resistance, flame retardancy and white discoloration resistance were satisfactory and the samples passed the tests.

On the other hand, in Comparative Example **1,** the added amount of the copolymer (A) of ethylene and α-olefin having **3** to **12** carbon atoms was less than the range specified in the invention and flexibility was low.

In Comparative Example **2,** the added amount of the copolymer (A) of ethylene and α-olefin having **3** to **12** carbon atoms was above the range specified in the invention, and mechanical strength (tensile strength) and flame retardancy were low.

In Comparative Example **3,** the added amount of the maleic acid-modified ethylene copolymer (C) was less than the range specified in the invention (was not contained), and mechanical strength (tensile strength) and heat resistance were low.

In Comparative Example **4,** the added amount of the maleic acid-modified ethylene copolymer (C) was above the range specified in the invention, and flexibility was low.

In Comparative Example **5,** the added amount of the fatty acid-treated magnesium hydroxide was less than the range specified in the invention, and flame retardancy was low.

In Comparative Example **6,** the added amount of the fatty acid-treated magnesium hydroxide was above the range specified in the invention, and mechanical strength, flexibility, heat resistance and white discoloration resistance were low.

In Comparative Example **7,** a silane-treated magnesium hydroxide which is not specified in the invention was added, and mechanical strength (elongation) and flexibility were low.

In Comparative Example **8,** the added amount of the silicone rubber was less than the range specified in the invention (was not contained), and white discoloration resistance was low.

In Comparative Example **9,** the added amount of the silicone rubber was above the range specified in the invention, and it was not possible to perform extrusion molding.

In Comparative Example **10,** the added amount of the carbon black was above the range specified in the invention, and mechanical strength (elongation) and flexibility were low.

In Comparative Example **11,** the surface area of the carbon black was smaller than the range specified in the invention, and white discoloration resistance was low.

In Comparative Example **12,** the surface area of the carbon black was larger than the range specified in the invention, and mechanical strength (elongation) and flexibility were low.

## Claims

1. A halogen- and phosphorus-free flame-retardant resin composition, comprising:
a copolymer (A) of ethylene and α-olefin having **3** to **12** carbon atoms;
an ethylene-vinyl acetate copolymer (B); and
a maleic acid-modified ethylene copolymer (C) containing an ethylene and an α-olefin having **3** to **12** carbon atoms as copolymer components,
wherein a content of the copolymer (A) in the resin component is **20** to **80** mass%,
wherein a content of the maleic acid-modified ethylene copolymer (C) in the resin component is **5** to **30** mass%, and
wherein the halogen- and phosphorus-free flame-retardant resin composition further comprises, relative to **100** parts by mass of the resin component, **100** to **250** parts by mass of fatty acid-treated magnesium hydroxide, **1** to **15** parts by mass of silicone rubber, and **2** to **20** parts by mass of carbon black with a surface area of **11** to **99** m²/g.

2. The halogen- and phosphorus-free flame-retardant resin composition according to claim **1,** wherein the copolymer (A) is obtained by polymerization using a metallocene catalyst.

3. The halogen- and phosphorus-free flame-retardant resin composition according to claim **1** or **2,** wherein a content of the ethylene-vinyl acetate copolymer (B) in the resin component is **15** to **75** mass%.

4. An electric wire, comprising an insulation layer comprising a halogen- and phosphorus-free flame-retardant resin composition according to claim 1.

5. A cable, comprising a sheath comprising a halogen- and phosphorus-free flame-retardant resin composition according to claim 1.

6. The cable according to claim **5,** comprising the electric wire according to claim **4.**

## Patentansprüche

1. Halogen- und phosphorfreie flammhemmende Harzzusammensetzung, umfassend:
ein Copolymer (A) aus Ethylen und α-Olefin mit 3 bis 12 Kohlenstoffatomen ein Ethylen-Vinylacetat-Copolymer (B); und
ein mit Maleinsäure modifiziertes Ethylen-Copolymer (C), das ein Ethylen und ein α-Olefin mit 3 bis 12 Kohlenstoffatomen als Copolymerkomponenten enthält,
wobei der Gehalt des Copolymers (A) in der Harzkomponente 20 bis 80 Masse-% beträgt,
wobei der Gehalt des Maleinsäure-modifizierten Ethylen-Copolymers (C) in der Harzkomponente 5 bis 30 Masse-% beträgt, und
wobei die halogen- und phosphorfreie flammhemmende Harzzusammensetzung weiterhin, bezogen auf 100 Masseteile der Harzkomponente, 100 bis 250 Masseteile fettsäurebehandeltes Magnesiumhydroxid, 1 bis 15 Masseteile Silikonkautschuk und 2 bis 20 Masseteile Ruß mit einer Oberfläche von 11 bis 99 m²/g umfasst.

2. Halogen- und phosphorfreie flammhemmende Harzzusammensetzung nach Anspruch 1, wobei das Copolymer (A) durch Polymerisation unter Verwendung eines Metallocenkatalysators erhalten wird.

3. Halogen- und phosphorfreie flammhemmende Harzzusammensetzung nach Anspruch 1 oder 2, wobei der Gehalt des Ethylen-Vinylacetat-Copolymers (B) in der Harzkomponente 15 bis 75 Masse-% beträgt.

4. Elektrischer Draht, umfassend eine Isolierschicht, die eine halogen- und phosphorfreie flammhemmende Harzzusammensetzung nach Anspruch 1 umfasst.

5. Kabel, umfassend einen Mantel, der eine halogen- und phosphorfreie flammhemmende Harzzusammensetzung nach Anspruch 1 umfasst.

6. Kabel nach Anspruch 5, umfassend den elektrischen Draht nach Anspruch 4.

## Revendications

1. Une composition de résine ignifuge sans halogène ni phosphore, comprenant :
un copolymère (A) d'éthylène et d'α-oléfine ayant 3 à 12 atomes de carbone ;
un copolymère éthylène-acétate de vinyle (B) ; et
un copolymère d'éthylène modifié par l'acide maléique (C) contenant un éthylène et une α-oléfine ayant 3 à 12 atomes de carbone comme composants copolymères,
la teneur en copolymère (A) dans le composant résine étant de 20 à 80 % en masse,
la teneur en copolymère d'éthylène modifié par l'acide maléique (C) dans le composant résine étant de 5 à 30 % en masse, et
la composition de résine ignifuge sans halogène ni phosphore comprenant en outre, par rapport à 100 parties en masse du composant résine, 100 à 250 parties en masse d'hydroxyde de magnésium traité par un acide gras, 1 à 15 parties en masse de caoutchouc de silicone, et 2 à 20 parties en masse de noir de carbone ayant une surface spécifique de 11 à 99 m²/g.

2. La composition de résine ignifuge sans halogène ni phosphore selon la revendication 1, dans laquelle le copolymère (A) est obtenu par polymérisation en utilisant un catalyseur métallocène.

3. La composition de résine ignifuge sans halogène ni phosphore selon la revendication 1 ou la revendication 2, dans laquelle la teneur en copolymère éthylène-acétate de vinyle (B) dans le composant résine est de 15 à 75 % en masse.

4. Un fil électrique, comprenant une couche isolante comprenant une composition de résine ignifuge sans halogène ni phosphore selon la revendication 1.

5. Un câble, comprenant une gaine comprenant une composition de résine ignifuge sans halogène ni phosphore selon la revendication 1.

6. Le câble selon la revendication 5, comprenant le fil électrique selon la revendication 4.
